# EUROPEAN PATENT SPECIFICATION

(11) **EP 3 118 713 B1**
(45) Date of publication and mention of the grant of the patent: **11.07.2018**
(21) Application number: 16179115.7
(22) Date of filing: 12.07.2016
(51) Int. Cl.: G06F 1/16, G06F 3/0354

(54) **INPUT DEVICE AND ELECTRONIC APPARATUS**
EINGABEVORRICHTUNG UND ELEKTRONISCHE VORRICHTUNG
DISPOSITIF D'ENTRÉE ET APPAREIL ÉLECTRONIQUE

(30) Priority: 16.07.2015 JP 2015142312
(43) Date of publication of application: 18.01.2017
(73) Proprietor: Lenovo (Singapore) Pte. Ltd., Singapore 556741 (SG)
(72) Inventor: Kitamura, Masahiro, Kanagawa-ken, 921-402 (JP); Horiuchi, Mitsuo, Kanagawa-ken, 4-22-13 (JP)
(74) Representative: Leffers, Thomas

(56) References cited:
- US-A1- 2010 139 990
- US-A1- 2011 314 267
- US-A1- 2014 015 754
- US-A1- 2015 084 898

## Description

### Field of the Invention

The present invention relates to an input device including an operation-input part to receive an input operation that is vertically movably supported above a base-plate, and an electronic apparatus including such an input device.

### Background of the Invention

A laptop personal computer (laptop PC), for example, is provided with various input devices as an alternative of a mouse, such as a touch pad and a pointing device, in addition to a keyboard device. A touch pad enables the manipulation of a cursor displayed on a display device in response to a touch operation thereto with a fingertip or a pen tip.

For such an input device including a touch pad, the present applicant proposes the configuration enabling a touch operation and a press operation (input operation) of the touch pad of JP 2013-25422. In this configuration, an operation-input part to receive an input operation is vertically movably supported above a base-plate. For instance, a plurality of pseudo button areas is configured on a touch surface of the touch pad (operation-input part), which allows an operator to perform an input operation corresponding to each pseudo button area by pressing (clicking) the touch pad while touching the corresponding pseudo button area.

US 2015/0084898 A1 discloses an input device comprising an operation portion that allows an input operation to be performed by an operating body contacting with or coming close to an upper surface thereof, an input detection portion that detects an input operation with respect to the operation portion, a driving member provided below the operation portion that drives the operation portion in an up-down direction, an elastic member provided below the operation portion, a case member that holds the driving member, an interlocking member provided below the operation portion, connected to the operation portion, and driven with the operation portion, a restricting member provided between the operation portion and the interlocking member that restricts upward movement of the interlocking member, and a first damper member provided below the interlocking member, contactable with the interlocking member and having elasticity, wherein the elastic member elastically urges the interlocking member such that the interlocking member is brought into press contact with the first damper member.

### Summary of the Invention

Meanwhile, the above-mentioned input device is provided with a member to specify the ascending limit (position) of the touch pad. When the pressed touch pad returns to the original position, the touch pad comes into contact with such a member to specify the ascending limit, so that sound (rebound sound) occurs there. There is a demand to reduce such sound that is generated when a touch pad comes into contact with the member to specify the ascending limit.

In view of the problem of the conventional techniques, the present invention aims to provide an input device capable of reducing sound that is generated when the pressed operation-input part returns to the original position, and an electronic apparatus including such an input device.

An input device according to the present invention includes the features of claim 1.

With this configuration, the arm member of the operation-input part comes into contact with the hook of the base plate, whereby the ascending limit of the operation-input part is specified. Since at least one of the arm member and the hook has elasticity in their contacting direction, sound (rebound sound) generated from a contact of the arm member with the hook when the pressed operation-input part returns to the original position can be reduced.

In the input device according to the present invention, the base plate has another hook opposed to the hook, the operation-input part has another arm member opposed to the arm member, and the other arm member and the other hook can come into contact at a position above the ascending limit of the operation-input part that is specified by a contact with the arm member and the hook.

In this case, the other arm member is configured so as to come into contact with the other hook at a position above the ascending limit of the operation-input part, and therefore a contact between the other arm member and the other hook can prevent detachment of the operation-input part from the base plate even when a large force is applied thereto. That is, these other arm member and other hook function as a retainer, and if a large force leading to a failure to specify the ascending limit by the arm member and the hook, for example, is applied, the retainer can prevent the operation-input part from coming off from the base plate. Herein the other arm member is configured so as to come into contact with the other hook at a position above the ascending limit of the operation-input part. Thereby, when the pressed operation-input part returns to the original position, the arm member and the hook firstly come into contact so as to reduce rebound sound, and the other arm member and the other hook can function as a retainer.

In the input device according to the present invention, when the arm member has elasticity, the other arm member preferably has higher stiffness than the arm member. In this case, since the other arm member has higher stiffness than that of the arm member, if a large force is applied to the touch pad and the base plate, a contact between the other hook and the other arm member can prevent detachment of the touch pad from the base plate.

In the input device according to the present invention, when the hook has elasticity, the other hook preferably has higher stiffness than the hook. In this case, since the other hook has higher stiffness than that of the hook, if a large force is applied to the touch pad and the base plate, a contact between the other hook and the other arm member can prevent detachment of the touch pad from the base plate.

In the input device according to the present invention, the arm member and the other arm member may have protruding pieces at the forward ends that protrude in their opposed direction, and the hook and the other hook can come into contact with their corresponding protruding pieces.

Preferably in the input device according to the present invention, the arm member protrudes in a direction intersecting with an operating direction of a press operation to the operation-input part, and a forward end part of the arm member comes into contact with the hook. In this case, since the arm member protrudes in the direction intersecting with the direction of the press operation to the operation-input part, an increase in the dimension of the input device in the thickness direction can be avoided, meaning that the input device can be made thinner.

In the input device according to the present invention, the operation-input part includes a touch pad that can receive a touch operation and can receive a press operation.

An electronic apparatus according to the present invention includes the features of claim 7.

According to the present invention, since at least one of the arm member and the hook has elasticity in their contacting direction, sound (rebound sound) generated when the pressed operation-input part returns to the original position can be reduced.

The invention is defined by the appended claims.

### Brief Description of the Drawings

Fig. 1 is a perspective view of an electronic apparatus including an input device according to one embodiment of the present invention.
Fig. 2 is a cross-sectional side view schematically showing the configuration of the input device according to one embodiment of the present invention.
Fig. 3 is a perspective view of the input device shown in Fig. 2.
Fig. 4 is a perspective view showing the major part of the base plate in the input device shown in Fig. 3.
Fig. 5 is a perspective view that is an enlarged view of the major part of the input device shown in Fig. 3.
Fig. 6 schematically shows the major part of the input device in Fig. 3 viewed from the rear face.
Fig. 7 is a perspective view that is an enlarged view of the major part of the housing plate in the input device shown in Fig. 3.
Fig. 8 is a cross-sectional side view schematically showing the state where the touch pad in the input device according to one embodiment of the present invention is pressed.
Fig. 9 is a cross-sectional view taken along the arrow IX-IX of Fig. 5.

### Detailed Description of the Invention

Referring to the attached drawings, the following describes an input device of the present invention by way of an embodiment that is favorable in relationship with an electronic apparatus including this input device.

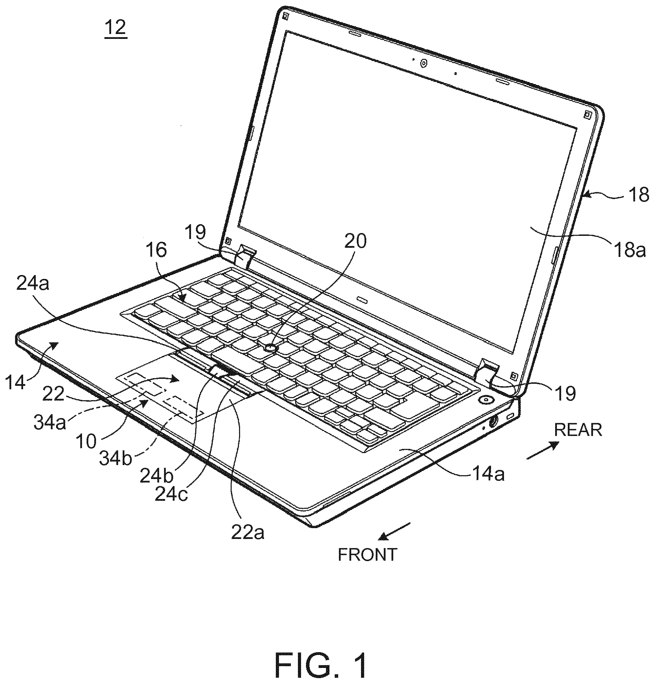

Fig. 1 is a perspective view of an electronic apparatus 12 including an input device 10 according to one embodiment of the present invention. In the following descriptions, based on the usage form of the input device 10 in the electronic apparatus 12 shown in Fig. 1 as a reference, the side near the operator is called the front side (forward), the back side is called the rear side (rearward), the thickness direction of a body chassis 14 making up the electronic apparatus 12 is called the vertical direction, and the width direction thereof is called the horizontal direction.

As shown in Fig. 1, the electronic apparatus 12 is a laptop PC including the body chassis 14 having the input device 10 and a keyboard device 16, and a display chassis 18 having a display unit 18a, such as a liquid crystal display. The display chassis 18 is coupled openably/closably to the body chassis 14 via a pair of left and right hinges 19, 19.

The body chassis 14 internally stores various electronic components, such as a board, a processing unit, a hard disk device, and a memory, which are not illustrated. The input device 10 and the keyboard device 16 are placed at the front and the rear on a top face 14a of the body chassis 14, respectively. At a substantially center of the keyboard device 16, a pointing stick 20 is provided. The pointing stick 20 is to manipulate a cursor (mouse pointer) displayed on the display unit 18a, which is input means that can be manipulated instead of the mouse.

Although the present embodiment exemplifies the configuration where the input device 10 is mounted on the electronic apparatus 12 as a laptop PC as stated above, the input device 10 may be mounted on a keyboard device as a single body to be connected to a desktop PC or the like.

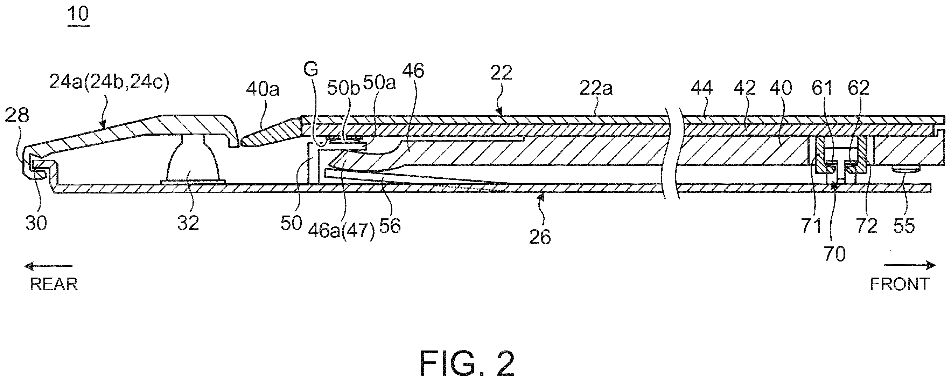

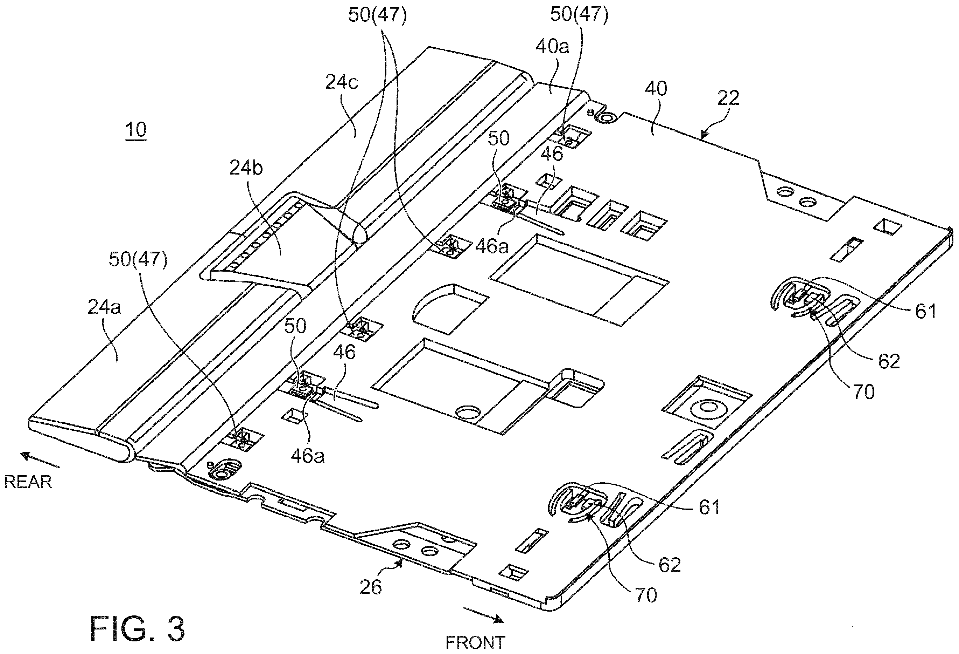

Next, an example of the configuration of the input device 10 is described. Fig. 2 is a cross-sectional side view schematically showing the configuration of the input device 10 according to one embodiment of the present invention, and Fig. 3 is a perspective view of the input device 10 shown in Fig. 2.

As shown in Fig. 1 and Fig. 2, the input device 10 includes a touch pad (operation-input part) 22 to receive a touch operation of an operator by bringing a fingertip or the like closer to or into contact with there, and three press buttons 24a, 24b and 24c arranged along the rear end part of the touch pad 22. As shown in Fig. 2 and Fig. 3, the touch pad 22 and the press buttons 24a to 24c are supported on the side of the upper face of the base plate 26 that is a metal plate member.

Firstly, the press buttons 24a to 24c operate in relation to the cursor manipulation using the pointing stick 20 or the touch pad 22, and are click-operation buttons corresponding to a left button, a center button and a right button of a typical mouse, respectively. The press buttons 24a to 24c may be placed close to the forward end of the touch pad 22, or may be disposed with a frame of the body chassis 14 put between the touch pad 22 and the buttons.

As shown in Fig. 2, the press buttons 24a to 24c have their rear ends 28 that rotatably engage with a supporting piece 30 standing from the rear end of the base plate 26, whereby these buttons can swing about the rear-ends 28 as a supporting point. Therefore, when the front-end part of each press button 24a to 24c is pressed, then a rubber dome 32 placed inside is compressed, whereby a switch not illustrated, such as a membrane switch, provided on the upper face of the base plate 26 is turned on.

Next, the touch pad 22 is configured as a click pad, with which a click operation by pressing also can be performed, in addition to a touch operation.

As shown in Fig. 1, pseudo button areas 34a, 34b are configured on a part of a touch operation face 22a as the surface of the touch pad 22 that is close to the front side. The pseudo button areas 34a, 34b have their respective areas on the touch operation face 22a defined with coordinates, and are invisible. In response to a press operation of the touch pad 22 while bringing a fingertip in contact with one of the pseudo button areas 34a, 34b, then processing or display corresponding to the pseudo button area 34a, 34b is performed. For instance, the two pseudo button areas 34a and 34b correspond to the left button and the right button of a typical mouse, respectively.

As shown in Fig. 2, the touch pad 22 has a three-layered configuration, including a housing plate 40 as a bottom plate that is placed to be opposed to the base plate 26, a board plate (board) 42 that is stacked on the upper face of the housing plate 40 to detect a touch operation to the touch operation face 22a, and a pad plate (pad) 44 that is stacked on the board plate 42, whose surface is the touch operation face 22a to receive a touch operation. Fig. 3 omits the illustration of the board plate 42 and the pad plate 44.

The board plate 42 is a board having a rectangular shape in planar view, which is a sensor to detect a touch operation to the pad plate 44 or a press operation to the touch pad 22. The board plate 42 is connected to a board in the body chassis 14 via wiring not illustrated. To the board plate 42, not-illustrated wiring from the press buttons 24a to 24c is connected. The pad plate 44 is a glass plate or a resin plate having a rectangular shape in planar view, and is fixedly attached to the upper face of the board plate 42 with adhesive, double-faced tape, or the like. The board plate 42 is provided with ground line G on the lower face close to the rear end, the ground line being a belt-like conductive part that extends along the horizontal direction (see Fig. 2).

As shown in Fig. 2 and Fig. 3, the housing plate 40 is a resin plate having a rectangular shape in planar view, and is a chassis component to hold the board plate 42 and the pad plate 44. On the upper face of the housing plate 40, the board plate 42 is fixedly attached with adhesive, double-faced tape, or the like. The housing plate 40 has an inclined-face part 40a at the rear end and near the forward-end face of the press buttons 24a to 24c that is inclined downward to the rear side. Due to such an inclined-face part 40a, the touch pad 22 does not hinder the press operation of the press buttons 24a to 24c.

A pair of left and right elastic pieces 46 is provided on the front side of the inclined-face part 40a of the housing plate 40 so as to be elongated toward the rear. The elastic pieces 46 are formed by cutting away their both left and right lateral parts and rear parts in the thickness direction so as to be a piece like a narrow tongue, whereby they have a cantilever structure to be elastic to some extent. Each elastic piece 46 has a nail 46a at the end (rear-end) so as to be displaced to be curved downward. The elastic pieces 46 are not fixedly attached to the lower face of the board plate 42, and at least the nails 46a thereof are disposed to have a predetermined gap between the upper faces thereof and the board plate 42, whereby protruding pieces 50 that are formed by cutting the upper face of the base plate 26 so as to lift it up described later are sandwiched between the upper faces of the nails 46a and the lower face of the board plate 42.

Further, a plurality of engagement pieces 47 are provided on the front side of the inclined-face part 40a of the housing plate 40 so as to have a shape substantially similar to that of the nails 46a of the elastic pieces 46 and to be elongated short to the rear. Each of the engagement pieces 47 also engages with the corresponding protruding piece 50 that is cut to lift up from the base plate 26 (see Fig. 2 and Fig. 3).

Since the elastic pieces 46 and the engagement pieces 47 of the housing plate 40 rotatably engage with the corresponding protruding pieces 50 of the base plate 26, the housing plate 40 (touch pad 22) can swing relative to the base plate 26 about these engaging portions as the supporting point. Herein in the case of the present embodiment, a not-illustrated guide structure vertically guides the housing plate 40 relative to the base plate 26, so that the housing plate 40 is configured to move vertically while moving the engagement portions of the elastic pieces 46 and the engagement pieces 47 with their corresponding protruding pieces 50 rearward and forward to some extent.

As shown in Fig. 2, a detection switch 55 is provided at a substantially center part on the lower face of the housing plate 40 close to the forward end. The detection switch 55 is to issue a predetermined detection signal when the touch pad 22 is pressed. The detection switch 55 is a metal dome switch, for example, that bulges downward from the lower face of the housing plate 40, which is turned on when the touch pad 22 is pressed until the switch comes into contact with the base plate 26, and this ON signal is detected by the board plate 42.

As shown in Fig. 3, the protruding pieces 50 are formed to stand from the upper face of the base plate 26. Each protruding piece 50 is formed like an angular U-letter shape in lateral view that has an abutting plate 50a at the upper end that is bent toward the rear when a part of the base plate 26 is cut to lift upward. On the upper face of the abutting plate 50a of the protruding piece 50, a dome-like convex 50b is provided so as to bulge upward. The protruding pieces 50 are provided at the positions corresponding to the elastic pieces 46 and the engagement pieces 47 of the housing plate 40. Among these protruding pieces 50, below the protruding pieces 50 corresponding to the elastic pieces 46, an elastic pressing part 56 is disposed, which is formed on the upper face of the base plate 26.

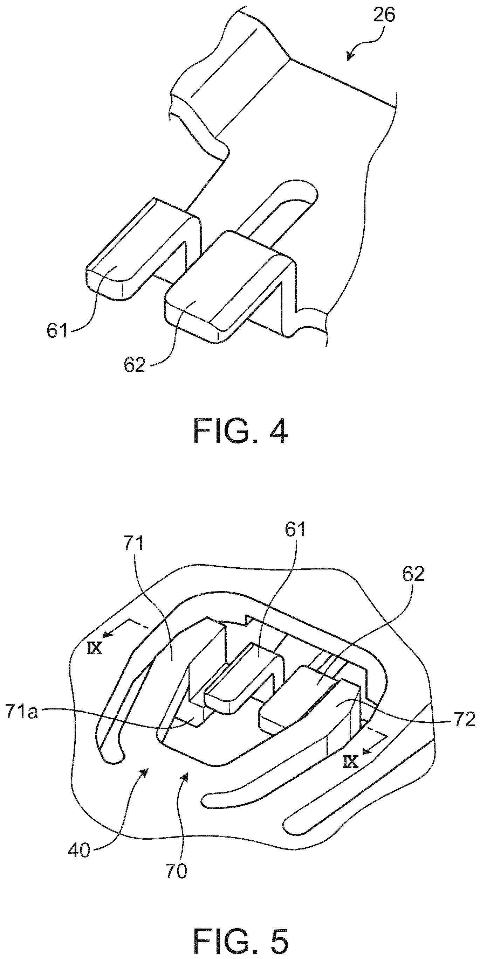

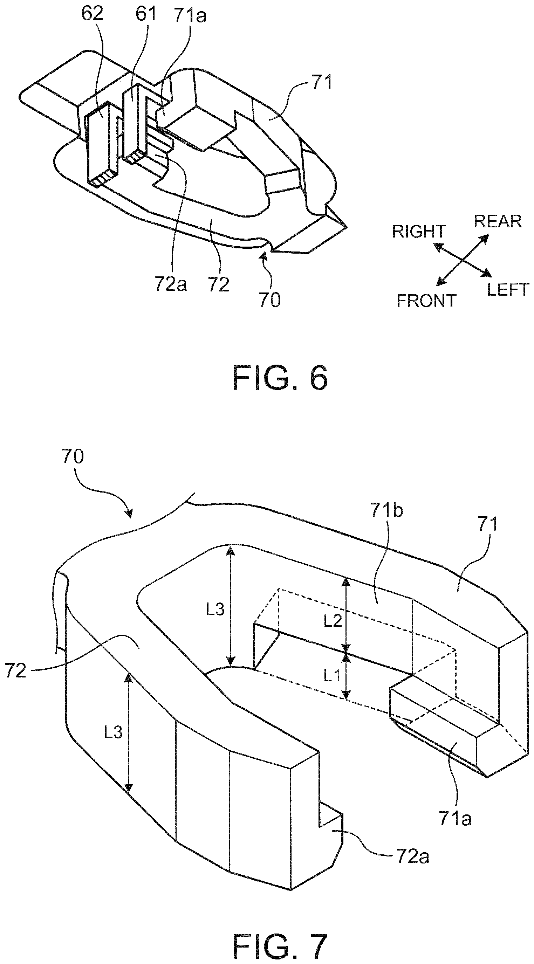

Fig. 4 is a perspective view showing the major part of the base plate 26 in the input device 10 shown in Fig. 3, and Fig. 5 is a perspective view that is an enlarged view of the major part of the input device 10 shown in Fig. 3. Fig. 6 schematically shows the major part of the input device 10 in Fig. 3 viewed from the rear face, and Fig. 7 is a perspective view that is an enlarged view of the major part of the housing plate 40 in the input device 10 shown in Fig. 3. Fig. 6 shows a part of the base plate 26 only (a first hook 61 and a second hook 62) for easier viewing.

As shown in Fig. 3 and Fig. 4, a hook (first hook) 61 standing like a L-letter shape in cross section from the upper face of the base plate 26 toward the touch pad 22 (operation-input part) and another hook (second hook) 62 opposed to this hook 61 are provided at the base plate 26 of a part close to the front end. Two of such first hook 61 and second hook 62 are disposed on the left and right of the base plate 26 of a part close to the front end, where the first hook 61 and the second hook 62 of each pair is disposed in the front-back direction (see Fig. 3).

As shown in Fig. 3, at a part close to the front end of the housing plate 40, a pair of left and right latches 70 is provided. Each latch 70 has an arm member (first arm member) 71 that can come into contact with the first hook 61 and another arm member (second arm member) 72 that can come into contact with the second hook 62. The latch 70 has a substantially V-letter shape in a planar view, including the first arm member 71 and the second arm member 72 (see Figs. 5 and 6). That is, the first arm member 71 and the second arm member 72 are disposed so that their parts closed to the forward end are spaced from each other.

These first arm member 71 and second arm member 72 protrude in the direction intersecting with the operating direction of the press operation to the touch pad 22, and are configured so that their forward ends can come into contact with the first hook 61 and the second hook 62, respectively. The forward ends of the first arm member 71 and the second arm member 72 are provided with protruding pieces 71a and 72a, respectively, that protrude in their opposed direction so that the first hook 61 and the second hook 62 can come into contact with these protruding pieces 71a and 72a.

In the state where the touch pad 22 is not pressed, as shown in Figs. 5 and 6, the forward ends of the first hook 61 and the first arm member 71 come into contact with vertically, whereby the ascending limit of the touch pad 22 is specified. That is, the first hook 61 and the first arm member 71 are parts that couple in the direction where the housing plate 40 is overlapped with the base plate 26.

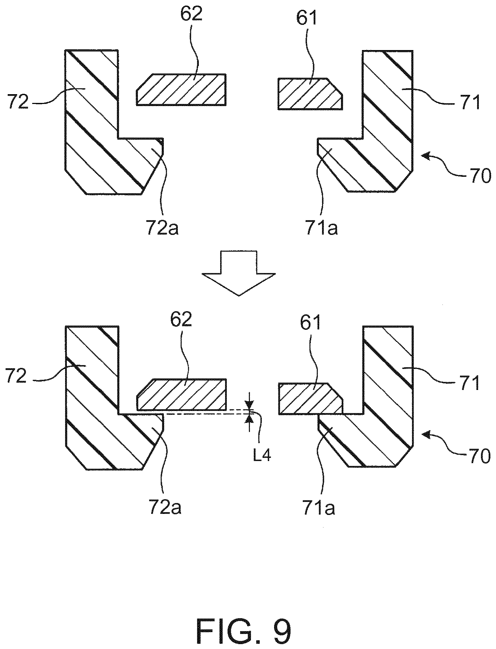

Further, in the state where the touch pad 22 is not pressed, there is a slight gap between the second hook 62 and the second arm member 72, meaning that the second hook 62 and the second arm member 72 do not come into contact with each other. That is, the second hook 62 is disposed at a position higher than the first hook 61, whereby the former does not come into contact with the second arm member 72 when the touch pad 22 is not pressed (see Fig. 9). In this way, the second arm member 72 is configured so that it can come into contact with the second hook 62 at a position above the ascending limit of the touch pad 22.

Herein, at least one of the first hook 61 and the first arm member 71 have elasticity in their contacting direction, and in the present embodiment, both of the first hook 61 and the first arm member 71 have elasticity in their contacting direction (vertical direction in Fig. 3). Specifically, the first hook 61 has a length from the base end to the forward end that is longer than that of the second hook 62 and has a smaller width, whereby it has elasticity in the vertical direction (see Fig. 4). Alternatively, the thickness of the first hook 61 may be made smaller, whereby elasticity thereof can be increased.

Meanwhile the first arm member 71 is made thinner than the second arm member 72 so as to have elasticity. Specifically as shown in Fig 7, the first arm member 71 has a thin part 71b having a thickness L2 that is thinner than the thickness indicated with L3. That is, as shown in Fig. 7, the thin part 71b is thinner than the second arm member 72 by the thickness L1.

In other words, the second hook 62 has a length from the base end to the forward end that is shorter than that of the first hook 61 and has a larger width, whereby the second hook 62 has high stiffness compared with the first hook 61. Then the second arm member 72 is thicker than the first arm member 71, whereby the second arm member 72 has high stiffness compared with the first arm member 71.

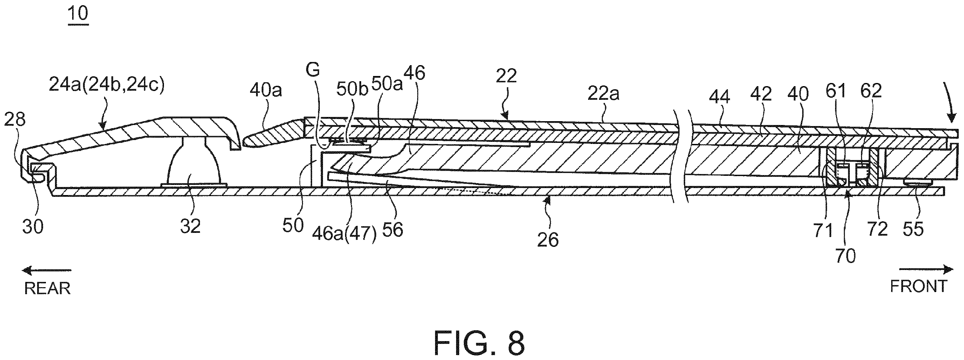

Fig. 8 is a cross-sectional side view schematically showing the state where the touch pad 22 in the input device 10 according to one embodiment of the present invention is pressed. Fig. 9 is a cross-sectional view taken along the arrow IX-IX of Fig. 5. Herein, the upper part of Fig. 9 shows the state where the touch pad 22 is pressed, and the lower part shows the state where the pressed touch pad returns to the original position (the state where it is not pressed).

As shown in Fig. 8, when the front part of the touch pad 22 is pressed, the touch pad 22 rotates relative to the protruding pieces 50 so that the front part of the touch pad 22 goes down. At this time, the detection switch 55 is pressed, whereby such press operation is detected by the board plate 42. Herein as shown in Fig. 8 and the upper part of Fig. 9, when the touch pad is pressed, the first hook 61 and the first arm member 71, which were in a contact state, are separated. Then, the pressed touch pad returns to the original position, the first hook 61 and the first arm member 71 come into contact again, so that sound (rebound sound) is generated. In the input device 10, since the first hook 61 and the first arm member 71 have elasticity, the rebound sound is absorbed by such elastic parts, and therefore the rebound sound can be reduced.

Further in the input device 10, the second arm member 72 is configured so as to come into contact with the second hook 62 at a position above the ascending limit of the touch pad 22, and therefore a contact between the second arm member 72 and the second hook 62 can prevent detachment of the touch pad 22 from the base plate 26 even when a large force is applied thereto. That is, these second arm member 72 and second hook 62 function as a retainer, and if a large force leading to a failure to specify the ascending limit of the touch pad 22 by the first arm member 71 and the first hook 61, for example, is applied, the retainer can prevent the touch pad 22 from coming off from the base plate 26.

As shown in Fig. 9, the second arm member 72 is configured so as to come into contact with the second hook 62 at a position above the ascending limit of the touch pad 22 by L4. Thereby, when the pressed touch pad 22 of the input device 10 returns to the original position, the first arm member 71 and the first hook 61 firstly come into contact so as to reduce rebound sound, and the second arm member 72 and the second hook 62 can function as a retainer.

Further, the second arm member 72 of the input device 10 has higher stiffness than that of the first arm member 71, and therefore if a large force is applied to the touch pad 22 and the base plate 26, a contact between the second hook 62 and the second arm member 72 having such high stiffness can function as a retainer reliably, whereby detachment of the touch pad 22 from the base plate 26 can be prevented.

Further, the second hook 62 of the input device 10 has higher stiffness than that of the first hook 61, and therefore if a large force is applied to the touch pad 22 and the base plate 26, a contact between the second arm member 72 and the second hook 62 having such high stiffness can function as a retainer reliably, whereby detachment of the touch pad 22 from the base plate 26 can be prevented.

Further, the first arm member 71 and the second arm member 72 of the input device 10 protrude in the direction intersecting with the direction of the press operation to the touch pad 22, and therefore an increase in the dimension of the input device 10 in the thickness direction can be avoided, meaning that the input device 10 can be made thinner. It should be noted here that the first arm member 71 and the second arm member 72 preferably protrude in the direction substantially orthogonal to the direction of the press operation to the touch pad 22.

Further, since each latch 70 has a V-letter shape made up of the first arm member 71 and the second arm member 72, when the first hook 61 and the second hook 62 of the base plate 26 are pressed there from the below, the first arm member 71 and the second arm member 72 are pressed apart so as to enable fitting of the first hook 61 and the second hook 62 into the latch 70. Herein, the first arm member 71 and the second arm member 72 have the protruding pieces 71a and 72a, respectively, at their forward ends that protrude in their opposed direction. Then, the first hook 61 and the second hook 62 can come into contact with these protruding pieces 71a and 72a, respectively.

The above embodiment describes the case where each latch has the first arm member and the second arm member. In an example useful for understanding the invention, the latch may not have such a second arm member. In this case, the base plate may not have a second hook.

Alternatively, each latch may have two opposed first arm members. In this case, these first arm members may come into contact with two first hooks, respectively, having elasticity.

The present invention is applicable also to input devices other than a click pad including the touch pad 22 movably held above the base plate 26.

### [Description of Symbols]

- 10: Input device
- 12: Electronic apparatus
- 14: Body chassis
- 16: Keyboard device
- 18: Display chassis
- 18a: Display unit
- 20: Pointing stick
- 22: Touch pad (operation-input part)
- 22a: Touch operation face
- 24a to 24c: Press button
- 26: Base plate
- 40: Housing plate
- 42: Board plate
- 44: Pad plate
- 46: Elastic piece
- 46a: Nail
- 47: Engagement piece
- 50: Protruding piece
- 50a: Abutting plate
- 50b: Convex
- 55: Detection switch
- 56: Elastic pressing part
- 61: Hook (first hook)
- 62: Another hook (second hook)
- 70: Latch
- 71: Arm member (first arm member)
- 72: Another arm member (second arm member)
- 71a, 72a: Protruding piece
- 71b: Thin part
- G: Ground line

## Claims

1. An input device, said input device being a depressible touch pad for a computer and comprising an operation-input part to receive an input operation that is vertically movably supported above a base plate (26), wherein
the base plate (26) has a first hook (61) standing toward the operation-input part,
the operation-input part has a first arm member (71) that can come into contact with the first hook (61),
a contact of the first arm member (71) with the first hook (61) specifies an ascending limit of the operation-input part, and
the first arm member (71), or the first hook (61), or both are elastically deformable in their contacting direction to cushion the contact of the first arm member (71) with the first hook (61), wherein a contact surface of the first hook (61) is configured in such a way, that it is in contact with a corresponding surface of the first arm member (71) when the operation-input part does not receive an input operation, **characterized in that** the first hook (61) is further configured in such a way, that an upper surface of the first hook (61) opposite to the contact surface does not come into contact with any other element, and wherein the base plate (26) has a second hook (62)
opposed to the first hook (61),
the operation-input part has a second arm member (72) opposed to the first arm member (71), and
the second hook (62) is disposed at a position higher than the first hook (61), such that the second hook (62) does not come into contact with the second arm member (72) when the operation-input part does not receive an input operation, wherein the second arm member (72) is configured so that it can come into contact with the second hook (62) at a position above the ascending limit of the operation-input part.

2. The input device according to claim 1, wherein when the first arm member (71) has elasticity, the second arm member (72) has higher stiffness than the first arm member.

3. The input device according to claim 1 or 2, wherein
when the first hook (61) has elasticity, the second hook (62) has higher stiffness than the first hook.

4. The input device according to any one of claims 1 to 3, wherein
the first arm member (71) and the second arm member (72) have protruding pieces (71a, 71b) at the forward ends that protrude in their opposed direction, and
the first hook (61) and the second hook (62) can come into contact with their corresponding protruding pieces (71a, 71b).

5. The input device according to any one of claims 1 to 4, wherein
the first arm member protrudes in a direction intersecting with an operating direction of a press operation to the operation-input part, and a forward end part of the first arm member (71) comes into contact with the first hook (61).

6. The input device according to any one of claims 1 to 5, wherein
the operation-input part comprises a touch pad that can receive a touch operation and can receive a press operation.

7. An electronic apparatus comprising: the input device according to any one of claims 1 to 6, a keyboard device (16), and a display device to display in accordance with an input operation through the input device (10) and the keyboard device (16).

## Patentansprüche

1. Eingabevorrichtung, wobei die Eingabevorrichtung ein herunterdrückbares Touchpad für einen Computer ist und einen Bedienungseingabebereich zum Empfangen einer Eingabebedienung umfasst, die vertikal beweglich über einer Basisplatte (26) gelagert ist, wobei die Basisplatte (26) einen ersten Haken (61) aufweist, der in Richtung des Bedienungseingabebereichs hervorsteht,
wobei der Bedienungseingabebereich ein erstes Armelement (71) aufweist, das mit dem ersten Haken (61) in Kontakt kommen kann,
wobei ein Kontakt des ersten Armelements (71) mit dem ersten Haken (61) eine ansteigende Begrenzung des Bedienungseingabebereichs spezifiziert,
und
wobei das erste Armelement (71) oder der erste Haken (61) oder beide elastisch verformbar in deren Kontaktrichtung sind, um den Kontakt des ersten Armelements (71) mit dem ersten Haken (61) zu polstern, wobei eine Kontaktoberfläche des ersten Hakens (61) derart ausgebildet ist, dass sie in Kontakt mit einer korrespondierenden Oberfläche des ersten Armelements (71) ist, wenn der Bedienungseingabebereich keine Eingabebedienung empfängt, **dadurch gekennzeichnet, dass** der erste Haken (61) weiter derart ausgebildet ist, dass eine obere Oberfläche des ersten Hakens (61) gegenüber zu der Kontaktoberfläche nicht in Kontakt mit einem anderen Element kommt und wobei die Basisplatte (26) einen zweiten Haken (62) gegenüber von dem ersten Haken (61) aufweist, wobei der Bedienungseingabebereich ein zweites Armelement (72) gegenüber von dem ersten Armelement (71) aufweist und wobei der zweite Haken (62) an einer Position angeordnet ist, die höher ist, als der erste Haken (61), sodass der zweite Haken (62) nicht in Kontakt mit dem zweiten Armelement (72) kommt, wenn der Bedienungseingabebereich keine Eingabebedienung empfängt, wobei das zweite Armelement (72) ausgebildet ist, sodass es in Kontakt mit dem zweiten Haken (62) in einer Position über der ansteigenden Begrenzung des Bedienungseingabebereichs kommen kann.

2. Eingabevorrichtung nach Anspruch 1, wobei, wenn das erste Armelement (71) Elastizität aufweist, das zweite Armelement (72) eine größere Steifigkeit als das erste Armelement aufweist.

3. Eingabevorrichtung nach Anspruch 1 oder 2, wobei, wenn der erste Haken (61) Elastizität aufweist, der zweite Haken (62) eine größere Steifigkeit als der erste Haken aufweist.

4. Eingabevorrichtung nach einem der Ansprüche 1 bis 3, wobei das erste Armelement (71) und das zweite Armelement (72) vorragende Teile (71a, 71b) an den nach vorne gerichteten Enden aufweisen, die in deren entgegengesetzte Richtung vorragen, und der erste Haken (61) und der zweite Haken (62) in Kontakt mit deren korrespondierenden vorragenden Teilen (71a, 71b) kommen können.

5. Eingabevorrichtung nach einem der Ansprüche 1 bis 4, wobei das erste Armelement in einer Richtung vorragt, die sich mit einer Bedienungsrichtung einer Drückbedienung auf den Bedienungseingabebereich überschneidet und ein nach vorne gerichteter Endbereich des ersten Armelements (71) in Kontakt mit dem ersten Haken (61) kommt.

6. Eingabevorrichtung nach einem der Ansprüche 1 bis 5, wobei der Bedienungseingabebereich ein Touchpad umfasst, das eine Berührungsbedienung empfangen kann und eine Drückbedienung empfangen kann.

7. Elektronische Vorrichtung, umfassend die Eingabevorrichtung nach einem der Ansprüche 1 bis 6, eine Tastaturvorrichtung (1) und eine Anzeigevorrichtung, um gemäß einer Eingabebedienung durch die Eingabevorrichtung (10) und der Tastaturvorrichtung anzuzeigen.

## Revendications

1. Dispositif d'entrée, ledit dispositif d'entrée étant un pavé tactile qui peut être enfoncé pour un ordinateur comprenant une partie d'entrée d'opération destinée à recevoir une opération d'entrée qui est supportée mobile verticalement au-dessus d'une plaque de base (26),
la plaque de base (26) comportant un premier crochet (61) posé en direction de la partie d'entrée d'opération,
la partie d'entrée d'opération comportant un premier élément (71) de bras qui peut venir en contact avec le premier crochet (61),
un contact du premier élément (71) de bras avec le premier crochet (61) spécifie une limite ascendante de la partie d'entrée d'opération et le premier élément (71) de bras ou le premier crochet (61), ou les deux sont élastiquement déformables dans leur direction de contact pour amortir le contact du premier élément (71) de bras avec le premier crochet (61), une surface de contact du premier crochet (61) étant conçue de telle sorte qu'elle soit en contact avec une surface correspondante du premier élément (71) de bras lorsque la partie d'entrée d'opération ne reçoit aucune opération d'entrée, **caractérisé en ce que** le premier crochet (61) est en outre conçu de telle sorte qu'une surface supérieure du premier crochet (61) en regard à la surface de contact ne vienne pas en contact avec un quelconque autre élément, et la plaque de base (26) ayant un second crochet (62) en regard du premier crochet (61),
la partie d'entrée d'opération ayant un second élément (72) de bras en regard du premier élément (71) de bras, et
le second crochet (62° est disposé dans une position supérieure à celle du premier crochet (61) de manière que le second crochet (62) ne vienne pas en contact avec le second élément (72) de bras lorsque la partie d'entrée d'opération ne reçoit aucune opération d'entrée, le second élément de bras (72) étant conçu de sorte qu'il puisse venir en contact avec le second crochet (62) dans une position au-dessus de la limite ascendante de la partie d'entrée d'opération.

2. Dispositif d'entrée selon la revendication 1, lorsque le premier élément (71) de bras est élastique, le second élément (72) de bras étant plus rigide que le premier élément de bras.

3. Dispositif d'entrée selon la revendication 1 ou la revendication 2, lorsque le premier crochet (61) est élastique, le second crochet (62) est plus rigide que le premier crochet.

4. Dispositif d'entrée selon l'une quelconque des revendications 1 à 3, le premier élément (71) de bras et le second élément (72) de bras ayant des parties en saillie (71a, 71b) à des extrémités avant qui font saillie dans leur direction opposée, et le premier crochet (61) et le second crochet (62) pouvant venir en contact avec leurs parties en saillie correspondante (71a, 71b).

5. Dispositif d'entrée selon l'une quelconque des revendications 1 à 4, le premier élément de bras faisant saillie dans une direction croisant une direction d'opération d'une opération de pression sur la partie d'entrée d'opération et une partie d'extrémité avant du premier élément (71) de bras venant en contact avec le premier crochet (61).

6. Dispositif d'entrée selon l'une quelconque des revendications 1 à 5, la partie d'entrée d'opération comprenant un pavé tactile qui peut recevoir une opération tactile et qui peut recevoir une opération de pression.

7. Appareil électronique comprenant : le dispositif d'entrée selon l'une quelconque des revendications 1 à 6, un dispositif formant clavier (16) et un afficheur destiné à afficher en fonction d'une opération d'entrée par l'intermédiaire du dispositif d'entrée (10) et du dispositif formant clavier (16).
